# EUROPEAN PATENT SPECIFICATION

(11) **EP 2 988 399 B1**
(45) Date of publication and mention of the grant of the patent: **17.10.2018**
(21) Application number: 15181757.4
(22) Date of filing: 20.08.2015
(51) Int. Cl.: H02K 5/22, H02K 5/06, H02K 5/00

(54) **FASTENING SYSTEM FOR A TERMINAL BOX AND ELECTRICAL MACHINE**
BEFESTIGUNGSSYSTEM FÜR EINE ANSCHLUSSDOSE UND ELEKTRISCHE MASCHINE
SYSTÈME DE FIXATION POUR UNE BOÎTE À BORNES ET MACHINE ÉLECTRIQUE

(30) Priority: 22.08.2014 US 201462040666 P
(43) Date of publication of application: 24.02.2016
(73) Proprietor: Weg Equipamentos Electricos S.A., 89256-900 Jaragua do Sul - SC (BR)
(72) Inventor: DOS ANJOS, Emerson Daniel, Jaraguá do Sul, Santa Catarina (BR)
(74) Representative: Cabinet Plasseraud

(56) References cited:
- EP-A1- 0 917 276
- CN-B- 101 807 828
- US-A- 5 769 659
- US-A1- 2002 117 919
- US-A1- 2008 067 884

## Description

### FIELD OF INVENTION

The present invention relates to an electrical machine of the type comprising a housing and a terminal box, and more specifically to an electrical machine with an efficient system for fastening and sealing the terminal box.

### BACKGROUND OF THE INVENTION

Several different types of electrical machine housings are known in the prior art and basically comprise a frame in which parts and components of the machine are housed, such as, the parts that constitute a rotating electrical machine.

Terminal boxes connected to the housing for enclosing the electrical connection cables of the machine are also known in the prior art.

Typically, the terminal box design should be carefully developed to ensure its proper attachment to the housing, a suitable site for installing the terminal board or terminal support and a proper seal between the housing and the box and between the lid and the box.

The terminal boxes known in the art comprise a frame with a lid, which is usually fixed to the machine housing by means of screws. The terminal board is placed inside the frame and it is bolted to the frame or to the machine housing. Gaskets (elastomeric or polymeric) are used to ensure proper sealing between the frame of the box and the housing of the machine and between the frame of the box and the lid.

Therefore, the terminal box solutions known in the art present drawbacks related to the complexity of the fastening system and to the use of additional fastening and/or sealing components.

The high complexity and the use of additional components hinder and increase the time needed to mount the electrical machine and, consequently, increase its costs.

German prior art document no. DE 102009008703 describes a terminal box solution, which aims to facilitate the assembly process by providing a solution that allows flexibility in positioning the box frame relative to the motor housing. To achieve this solution, the connection box described in the document presents a frame, one socket type base and a terminal board that are assembled with a snap-fit. To fasten the box, the socket and the terminal board are fastened by screw to the motor housing. A cover closes the frame and a central bolt passes through the cover, through a plate support element, and attaches to the housing.

The socket type base and a corresponding part of the motor housing have a circular shape. Thus, with this with this construction, the solution of DE 102009008703 allows varying the terminal box orientation in a rotation of up to 360°, by unscrewing the central screw. After choosing the desired orientation, the central screw is screwed and the terminal box remains fixed at the desired position and orientation.

Although DE 102 009 008 703 presents a solution with assembly flexibility, the proposed solution comprises a number of building components. Furthermore, for the box to be properly fixed in position to the motor housing, the screw must be connected through the lid that closes the box frame and tightened firmly. This feature requires the lid to be previously worked to form the screw-receiving hole.

Document US2008/0067884 disclosed a connection device for an electrical machine comprising a socket base body for attachment to a terminal box socket of na electrical machine. A plurality of contacts of the electrical machine can be plugged or clipped into said base body.

Therefore, a need remains in the art for a fastening system to fasten a terminal box to the housing of an electrical machine that is simple, efficient and effective.

### OBJECTS OF THE INVENTION

It is an object of the present invention to provide a new fastening system for fastening a terminal box to an electrical machine housing, where the fastening system is simple and efficient.

It is another object of the present invention to provide a new fastening system for fastening a terminal box to an electrical machine housing, which enables quick and simple assembly.

It is yet another object of the present invention to provide a new fastening system for fastening a terminal box to an electrical machine housing, which has an efficient sealing system.

### SUMMARY OF THE INVENTION

The present invention achieves the above objectives through the features of independent claim 1.

### BRIEF DESCRIPTION OF THE DRAWINGS

The present invention will be described in more detail below, with references to the accompanying drawings, in which:
Figure 1 - is a perspective view of an electrical machine housing that does not form part of the present invention but represents background art useful for understanding the invention;
Figure 2 - is a perspective cross-sectional view showing the fastening system of the housing of Figure 1;
Figure 3 - is a side cross-sectional detail view of the joint between the lower box part of the terminal box and the perimetric wall of the housing shown in figure 1;
Figure 4 - is a detail view of the cross section of the junction between the upper and lower parts of the terminal box according to the fastening system of the housing shown in figure 1;
Figure 5 - is an exploded perspective view of a fastening system that does not form part of the present invention but representes background art useful for understanding the invention;
Figure 6 - is a top view of the fastening system of Figure 5, showing part of the housing that receives the terminal box, the lower box part of the terminal box, the terminal board and fastening screw, in assembled configuration;
Figure 7 - is a cross-sectional view of the fastening system of Figure 5, showing part of the housing that receives the terminal box, the lower box part of the terminal box, the terminal board and the fastening screw, in assembled configuration; and
Figure 8 - is a cross-sectional view of the housing of an electric machine showing an embodiment of the fastening system according to the present invention.

### DETAILED DESCRIPTION OF THE INVENTION

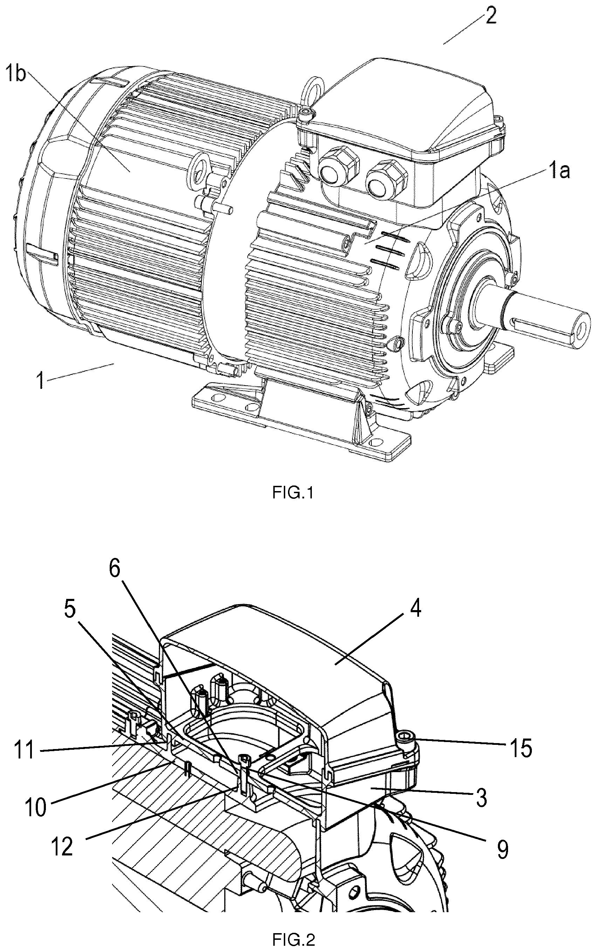

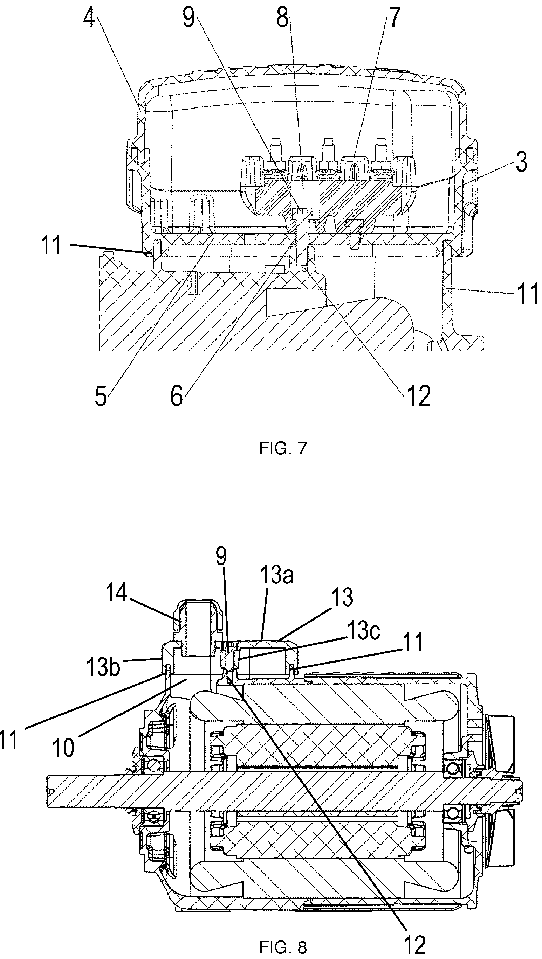

The present invention will be described below based on an embodiment of the invention shown in figure 8. Although the embodiments shown in figures 1 to 7 do not form part of the present invention, they represent background art useful for understanding the invention.

The figures show an electrical machine of the type that comprises a housing and a terminal box fastened to the housing. It should be noted, however, that the solution of the present invention could also be applied to other electrical machines comprising a housing and a terminal box as, for example, any rotating electrical machine having such features.

As shown in Figure 1 , the electrical machine comprises a housing split in the axial direction 1, formed by a first housing part 1 a and a second housing part 1 b. Therefore, Figure 1 shows a machine with the housing parts slightly spaced apart. Naturally, for machine operation, the parts will be in coupled configuration.

It should be noted, however, that the present invention could be incorporated in electrical machines with housings having different constructive features, for example, of the type comprising a main body with end caps.

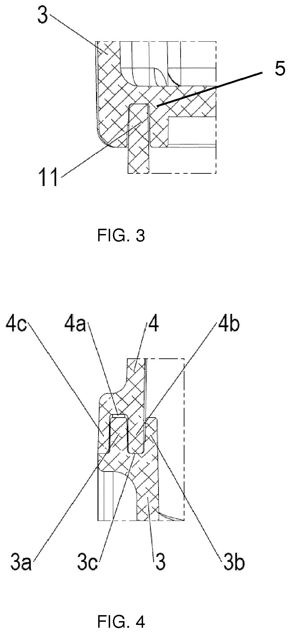

In the housing 1 is fastened a terminal box 2 enclosing connections to the motor electric cables or allowing the passage and connection of the motor electric cables. As best illustrated in Figures 2 and 4 , terminal box 2 comprises a lower box part 3 and an upper box part 4.

Figure 2 shows a portion of the housing 1 where the terminal box 2 is fastened. The housing 1 has a receiving portion 10 for receiving the lower box part 3. The receiving portion 10 comprises, basically, an area delimited by a perimeter wall 11 and a screw connection hole 12.

As best illustrated in Figure 3 , the lower box part 3 has a base 5 configured to fit the perimetric wall 11 of the receiving portion 10.

Thus, as best seen in Figure 3 , the base 5 of the lower box part 3 has a recess configured to receive the perimetric wall 11, in a fitting manner. The base of the lower box part also has a through hole 6 which, after the lower box part is fitted with the receiving portion 10 of the housing 1, is aligned and concentric to the screw connection hole 12 of the receiving portion 10.

Thus, for fastening the terminal box 2 to the housing 1, the wall 11 of the receiving portion 10 is fitted to the base 5 of the lower box part 3, and a fastening screw 9 passes through the through hole 6 of the lower box part 3 and lodges in the screw connection hole 12 of the receiving portion 10 .

After fixing the lower box part 3, the terminal box is closed by fastening the upper box part 4.

The upper box part 4 is coupled to the lower box part 3 and the box parts are secured together by screws 15 (see figure 2). Two screws are used for fastening the box parts together.

Figure 4 shows an enlarged detail of the junction between the lower box part and the upper box part. As it will be explained below, the edges of the box allow for the achievement of a suitable sealing of the box, without the need of using additional polymeric seals or gaskets.

As it can be seen in the detailed view, the staggered labyrinth-like geometry of the edges of the walls of the box parts creates a contact area that, due to the pressure generated by fastening the closing screws, guarantees the sealing without the use of additional polymeric or elastomeric seals.

This staggered geometry is achieved by configuring the edges of the walls to form double wall portions, wherein one of the double walls from one of the box parts can be fitted between the double walls of the other of the box parts, and vice-versa.

Thus, as seen in figure 4 , the edge of the lateral walls of the upper box part 4 is formed with a recess 4a that forms two parallel wall parts 4b and 4c. The edge of the lateral walls of the lower box part 3 is formed with two parallel wall parts 3a and 3b, with one of the parallel wall parts 3a being formed on a plan parallel and laterally displaced in relation to the plan of the lateral wall. Therefore, a receiving space 3c is formed between the parallel wall parts 3a and 3b.

To achieve the staggered geometry when the box parts 3, 4 are coupled, the wall part 4b of the upper box part 4 is inserted in the receiving space 3c of the lower box part 3, whereas the parallel wall part 3a of the lower box part 3 is inserted in the recess 4a of the upper box part 4.

With said technical solution, an efficient sealing is created at a lower cost, since it eliminates the need for additional components such as joint gaskets.

It should be noted that, as seen in figure 3 , the same labyrinth-like staggered geometry can also be used for the sealing between the receiving portion 10 of the housing and the lower box part 3, as such geometry is achieved when the perimetric wall 11 of the receiving part 10 is fitted in the recess of the base 5 of the lower box part 3.

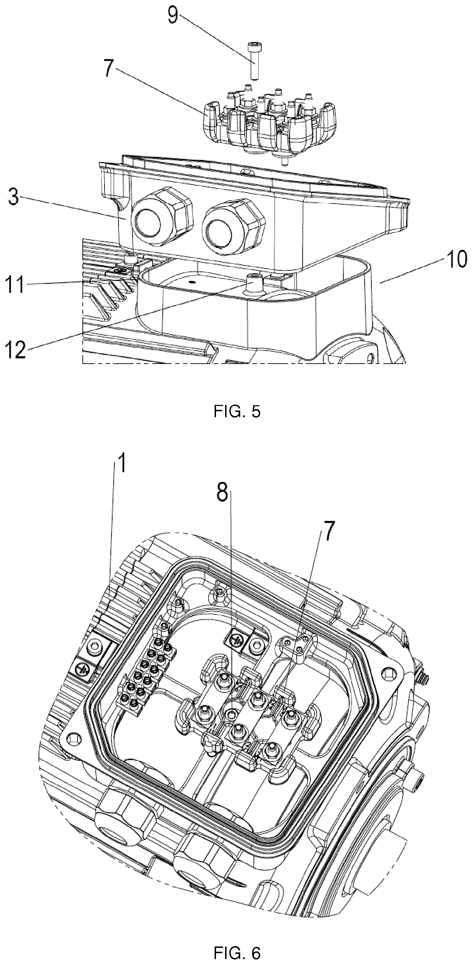

In figures 5 to 7, the terminal box 2 is configured to receive a terminal board 7. A terminal board 7 is placed in the lower box part 3, and the terminal board 7 includes a screw receiving hole 8 (see figure 6) which is aligned and concentric to the through hole 6 of the lower box part 3 and with the screw connecting hole 12 of the receiving portion 10. Thus, by using a single screw 9, the terminal board 7 is fastened to the housing 1, also fastening the lower box part 3 to the housing 1.

After fastening the lower box part 3 with the terminal board 7 to the housing by using a single screw 9, the upper box part 4 is used for closing the box 2.

Figure 8 shows anembodiment of the fastening system of the present invention. The elements of the invention that are common to the elements shown in figures 1 to 7 will be described with the same reference numbers.

In this embodiment, the terminal box is configured as a closing cover 13 that fits over the receiving portion 10 of the electrical machine housing.

The closing cover 13 presents a top wall 13a and a perimetric lateral wall 13b formed by four lateral wall portions configuring the laterals of the cover. Top wall 13a has a first orifice for receiving a cable passage fixture 14. The cable passage fixture 14 allows the passage of electrical cables of the electrical machine for connecting them to an equipment external to the housing.

The top wall 13a of the closing cover 13 also comprises a second orifice with a cylindrical wall projection 13c forming a screw receiving hole 13c.

The receiving portion 10 of the housing is configured with a perimetric wall 11 and a screw connecting hole 12.

Therefore, when fastening the closing cover 13, the screw receiving hole 13c stays aligned with the a screw connecting hole 12 of the receiving portion 10.

The inferior edge of the perimetric lateral wall 13b of the closing cover 13 has a recess configured to receive the perimetric wall 11 of the receiving portion 10, in a fitting manner.

Therefore, for fastening the closing cover 13, fitting is performed between the perimetric wall 11 of the receiving portion 10 and the lower edge of the perimetric side wall 13b of the closing cover 13, and then, a screw 9 is inserted into the screw receiving hole 13c and it is fixed in the screw connection hole 12 of the receiving portion 10.

Having described a example of a preferred embodiment of the electrical machine fastening system of the present invention, it should be understood that the scope of the present invention encompasses other possible variations of the inventive concept described, being limited solely by the wording of the appended claims.

## Claims

1. Electrical Machine of the type having a housing and a terminal box fastened to the housing, wherein the housing has a receiving portion and the terminal box is configured as a closing cover (13) having a top wall (13a), the receiving portion comprises a perimetric wall (11) and a screw connecting hole (12);
the terminal box comprises a perimetric lateral wall (13b);
wherein the top wall (13a) of the closing cover (13) has a first hole for receiving a cable passage fixture (14) and a second hole with a cylindrical wall projection (13c) forming a screw reception hole (13c);
wherein the perimetric lateral wall (13b) of the terminal box has an inferior edge with a recess configured for receiving the perimetric wall (11) of the receiving portion (10), in a fitting manner;
the fastening of the terminal box to the housing being performed by fitting the perimetric wall (11) of the receiving portion (10) with the recess of inferior edge of the perimetric lateral wall (13b) of the terminal box, and by inserting a single screw (9) in the screw reception hole (13c); the screw (9) being received by the screw reception hole (13c) of the closing cover (13) and connected to the screw connecting hole (12) of the receiving portion (10) of the housing (1).

## Patentansprüche

1. Elektrische Maschine des Typs mit einem Gehäuse und einer Anschlussdose, die am Gehäuse befestigt ist, wobei
das Gehäuse einen Aufnahmeabschnitt aufweist und die Anschlussdose als Verschlussdeckel (13) mit einer oberen Wand (13a) konfiguriert ist,
der Aufnahmeabschnitt eine perimetrische Wand (11) und eine Schraubenverbindungsöffnung (12) aufweist;
die Anschlussdose eine perimetrische Seitenwand (13b) aufweist;
wobei die obere Wand (13a) des Verschlussdeckels (13) eine erste Öffnung zum Aufnehmen einer Kabeldurchführungshalterung (14) und eine zweite Öffnung mit einem zylindrischen Wandvorsprung (13c), die eine Schraubenaufnahmeöffnung (13c) bildet, aufweist;
wobei die perimetrische Seitenwand (13b) der Anschlussdose eine untere Kante mit einer Aussparung zum passenden Aufnehmen der perimetrischen Wand (11) des Aufnahmeabschnitts (10) aufweist;
die Befestigung der Anschlussdose and das Gehäuse durch Anbringen der perimetrischen Wand (11) des Aufnahmeabschnitts (10) an der Aussparung der unteren Kante der perimetrischen Seitenwand (13b) der Anschlussdose und durch Einbringen einer einzelnen Schraube (9) in die Schraubenaufnahmeöffnung (13c) erfolgt; wobei die Schraube (9) von der Schraubenaufnahmeöffnung (13c) des Verschlussdeckels (13) aufgenommen und mit der Schraubenverbindungsöffnung (12) des Aufnahmeabschnitts (10) des Gehäuses (1) verbunden wird.

## Revendications

1. Machine électrique du type comportant un boîtier et une boîte à bornes fixée au boîtier, dans laquelle
le boîtier comporte une partie réceptrice et la boîte à bornes est configurée comme un couvercle de fermeture (13) comportant une paroi supérieure (13a),
la partie réceptrice comprend une paroi périphérique (11) et un trou de liaison par vis (12) ;
la boîte à bornes comprend une paroi latérale périphérique (13b) ;
dans laquelle la paroi supérieure (13a) du couvercle de fermeture (13) comporte un premier trou destiné à recevoir un dispositif de passage de câble (14) et un second trou doté d'une saillie de paroi cylindrique (13c) formant un trou de réception de vis (13c) ;
dans laquelle la paroi latérale périphérique (13b) de la boîte à bornes comporte un bord inférieur doté d'un évidement configuré pour recevoir la paroi périphérique (11) de la partie réceptrice (10), d'une manière ajustée ;
la fixation de la boîte à bornes au boîtier consistant à ajuster la paroi périphérique (11) de la partie réceptrice (10) avec l'évidement du bord inférieur de la paroi latérale périphérique (13b) de la boîte à bornes, et à introduire une seule vis (9) dans le trou de réception de vis (13c) ;
la vis (9) étant reçue par le trou de réception de vis (13c) du couvercle de fermeture (13) et reliée au trou de liaison par vis (12) de la partie réceptrice (10) du boîtier (1).
